# EUROPEAN PATENT SPECIFICATION

(11) **EP 3 509 318 B1**
(45) Date of publication and mention of the grant of the patent: **25.08.2021**
(21) Application number: 18248038.4
(22) Date of filing: 27.12.2018
(51) Int. Cl.: H04R 1/02, B60Q 3/14, B60Q 3/18, B60Q 3/20, B60Q 3/64, B60Q 3/80, F21K 9/00

(54) **SANDWICH ILLUMINATED GRILL**
BELEUCHTETER SANDWICHGRILL
GRILL À SANDWICH ÉCLAIRÉ

(30) Priority: 04.01.2018 EP 18150333
(43) Date of publication of application: 10.07.2019
(73) Proprietor: Harman Becker Automotive Systems GmbH, 76307 Karlsbad (DE)
(72) Inventor: Pilgaard Havemann, Marcel, 7560 Hjerm (DK)
(74) Representative: Rummler, Felix

(56) References cited:
- US-A1- 2013 026 504
- US-A1- 2014 360 805
- US-A1- 2015 370 002

## Description

### FIELD OF INVENTION

The present disclosure relates to the field of sound systems, particularly sound systems used in vehicles, and to ambient lighting, particularly ambient lighting used in vehicles. The disclosure further relates to visual stimulation and ambient illustration to be displayed by a sound system.

### BACKGROUND

US 2013/026504 A1 describes a light source including a substrate arranged into at least two facing surfaces which form a seam therebetween; and a lighting device with light emitting diode (LED) chips embedded therein in a linear arrangement. The LED chips generate light photons. The lighting device has a first edge and a second edge opposite to the first edge, the light photons within the lighting device that are emitted by the LED chips from a top surface of the LED chips being output from the lighting device at the second edge of the device. The lighting device is sandwiched in the seam between the two facing surfaces, the second edge of the lighting device being exposed when the seam is in an opened position.

US 2015/0370002 A1 describes a sheet light source that has a width in a front-to-back "x" direction, a length in a left-to-right "y" direction, and a height in a bottom-to-top "z" direction. The sheet light source includes a bottom conductive surface, a laser diode, a transparent conductive sheet, and an adhesive material portion. The laser diode is mounted on the conductive surface in the "z" direction. The transparent conductive sheet is laminated onto the laser diode and the conductive surface in the "z" direction. The adhesive material portion is located between the conductive sheet and the conductive surface, and binds the transparent conductive sheet to the laser diode and the conductive surface. The adhesive material portion further enables photons, emitted substantially in the "x" direction from the laser diode, to propagate therein to an edge and be output.

### SUMMARY

The present invention is defined in the independent claims. Preferred features are recited in the dependent claims. In the following description, any embodiment referred to and not falling within the scope of the claims is merely an example useful to the understanding of the invention.

According to one embodiment, there is disclosed a grille, in particular for a loudspeaker in a vehicle, the grille comprising a sandwich structure, the structure comprising at least an acrylic layer and one or more openings, in particular cut-outs forming a pattern on a top surface of the sandwich structure. The sandwich structure may be durable and easy to manufacture. The acrylic layer may serve as a light conducting inlet of the sandwich structure.

In another embodiment of the grille, the sandwich structure comprises a top layer disposed on a first side of the acrylic layer, thereby forming a top surface of the grille and/or a bottom layer disposed on a second side of the acrylic layer, thereby forming a bottom surface of the grille. The top layer may be formed by a wide range of materials providing different visual or tactile properties. The bottom layer may serve to stabilize or to connect the sandwich structure to other devices.

In another embodiment of the grille, the sandwich structure comprises a first lining layer in silver color disposed on the first side of the acrylic layer and arranged between the top layer and the acrylic layer, and/or a second silver-colored lining layer disposed on the second side of the acrylic layer and arranged between the acrylic layer and the bottom layer. Silver-colored lining layers may serve to reflect light between them. The silver-colored lining layers form reflectors on both sides of the acrylic layer, thereby forming light guides. Silver-colored lining layers may enhance visual effects.

In another embodiment of the grille, the sandwich structure comprises one or more LEDs, wherein the LEDs are located within the acrylic layer and are provided with electrical connections extending to an outer surface of the sandwich structure. The LEDs provided in the acrylic layer may be used and positioned to illuminate the cut-outs in the sandwich structure, thereby creating visual effects for a user.

In another embodiment of the grille, the one or more LEDs are placed around the acrylic layer to illuminate the cut-outs in the grille. LEDs may be positioned to emit light inside the acrylic layer. The acrylic layer may either be lighted evenly, or different regions may be visually emphasized. In another embodiment of the grille, the sandwich structure forms a circular disc wherein the one or more LEDs are distributed at a radial outer surface of the circular disc to illuminate the acrylic layer, thereby illuminating the cut-outs.

In another embodiment of the grille, the first and/or the second silver-colored lining layer are silver vinyl layers. Vinyl is a proven, durable and low-price material.

In another embodiment of the grille, the top layer is a wooden veneer and the bottom layer is a metal layer, preferably a copper layer. A wooden veneer may enhance the visual appearance of the grille and provide particular tactile and visually stimulating properties for a user. A copper layer is easily formable; whereby the grille may be matched to different environments. However, the bottom layer may comprise or consist of other metals such as brass, aluminum or steel.

According to another embodiment, there is disclosed a sound system, the system comprising at least one speaker, at least one grille, a controller operable to control the LEDs and a power source. The sound system may further comprise a computer readable medium, the medium comprising instructions to be carried out by the controller to control the illumination to be displayed in the cut-outs.

According to another embodiment, there is disclosed a method for illuminating a grille, the method comprising: receiving, by a controller, one or more first signals; selecting, by the controller, one of a plurality of illumination modes, wherein the illumination mode is associated with one of the received first signals; generating, by the controller, a second signal to control LEDs in the grille according to the selected illumination mode, thereby illuminating the grille. Each first signal may be unambiguously associated with an illumination mode. Thus, different illumination modes may be used to indicate different first signals to a user. For example, a connection status of a Bluetooth® connection established between a user's cell phone and a vehicle may be indicated according to a preset illumination scheme.

In another embodiment of the method, the controller is operable to receive a plurality of first signals, to prioritize one first signal of the plurality of first signals and to operate in a mode according to the prioritized first signal. If the controller receives more than one first signal, the controller may cause a decision to be made as to which signal is used to control the illumination, i.e. which illumination scheme is to be displayed. For example, when the controller receives a first signal from a Bluetooth® device and another first signal from a vehicle (e.g. indicating that one of the doors was left open), the controller may prioritize the signals according to a preset decision scheme and visually warn the user (e.g. by flashing red) instead of indicating the Bluetooth® connection.

In another embodiment of the method, one of the first signals is generated by a user equipment, or by a vehicle, wherein the signal represents an operation mode of the vehicle or a sound system.

### BRIEF DESCRIPTION OF THE DRAWINGS

One or more embodiments are shown in Figures 1-8:
- Figure 1: shows a grille according to a first embodiment;
- Figure 2: shows a wooden layer and a metal layer according to a second embodiment;
- Figure 3: shows a speaker with a grille according to the second embodiment;
- Figure 4: shows a schematic diagram of layers of the grille according to another embodiment;
- Figure 5: shows a schematic view of a grille according to a third embodiment;
- Figure 6: shows a schematic view of a grille according to a fourth embodiment;
- Figure 7: shows a schematic 3D view of a grille according to the embodiment shown in Fig. 6;
- Figure 8: shows a schematic view of a sound system according to another embodiment;
- Figure 9: shows a flow diagram of a method according to an embodiment;
- Figure 10: shows a schematic diagram of the embodiment of Fig. 9.

### DETAILLED DESCRIPTION OF THE PREFERRED EMBODIMENTS

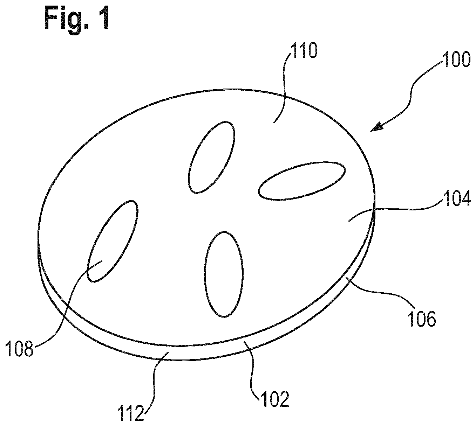

Figure 1 shows a grille 100 according to a first embodiment. The grille 100 comprises an acrylic layer 102 and a top layer 104. The top layer 104 is disposed above the acrylic layer 102. The top layer 104 may be a wooden layer, particularly a wooden veneer. The acrylic layer 102 and the top layer 104 may be directly connected to each other and form a sandwich structure 106. The sandwich structure 106 has cut-outs 108. The cut-outs 108 form openings in the grille 100. The cut-outs 108 extend trough the sandwich structure 106, thereby enabling the passage of light through the grille. The cut-outs 108 are leaf-shaped, but may have any other preferred shape. The grille 100 may form a cylindrical, circular disc having a top surface 110 and an outer surface 112. The outer surface 112 may be the surface of the walls of the cylindrical disc.

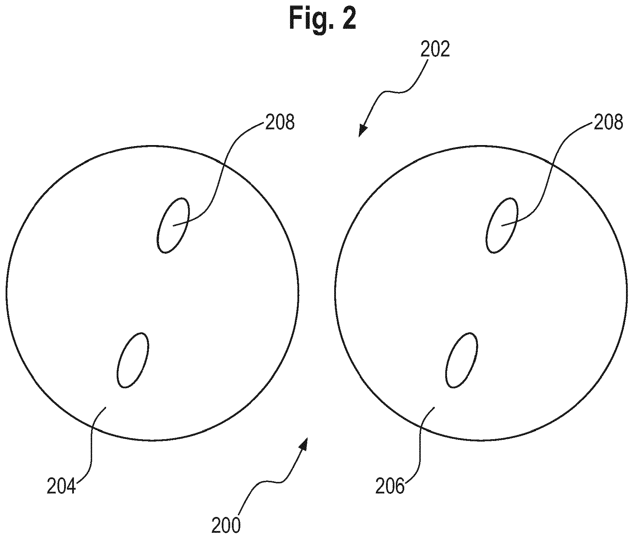

Figure 2 shows two exemplary sandwich layers 200 of the grille 202 according to a second embodiment. A wooden layer 204 forms the top layer of the sandwich structure 106. A metal layer 206 forms a bottom layer 206 of the sandwich structure 106. Both layers have superposed cut-outs 208. The acrylic layer 102 (not shown) is to be arranged between the wooden top layer 204 and the metal bottom layer 206. The acrylic layer has cut-outs corresponding to the cut-outs 208 of the top layer 204 and the bottom layer 206. Both top layer 204 and bottom layer 206 are disc-shaped and of the same diameter. The cut-outs 208 and the openings in the grille 202 may have any preferred shape, ranging from simple geometric patterns to complex artistic creations. The shape of the cut-outs 208 may be matched to a background illumination (not shown).

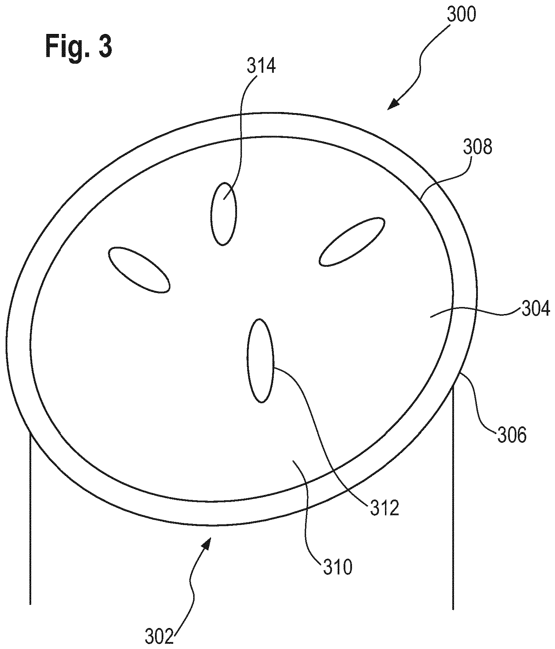

Figure 3 shows an assembly 300 comprising a speaker 302 and a grille 304 according to the second embodiment shown in Fig. 2. The grille 304 is fixed in front of the speaker 302, covering the speaker's outlet. The grille is surrounded by a cover 306, wherein the cover 306 covers the outer surface 112 to prevent light from bypassing the grille 304 at its outer side. The grille 304 is illuminated by LEDs (not shown). In this embodiment, the grille 304 is formed by a sandwich structure 308. The sandwich structure comprises a top layer 310 and an acrylic layer 312. The acrylic layer 312 conducts the light emitted by LEDs (not shown) to the cut-outs 314 of the sandwich structure 308. The LEDs thereby illuminate the grille 304. The acrylic layer 312 serves as a light conductor, illuminating the openings formed by the cut-outs 314. The shape of the openings is thereby made visible to a user. The LEDs may be connected to a programmable controller (not shown), operable to change the illumination to be displayed in the grille 304. This may allow for creating movements of the illumination, such as pulsating, circular and color effects on the grille 304.

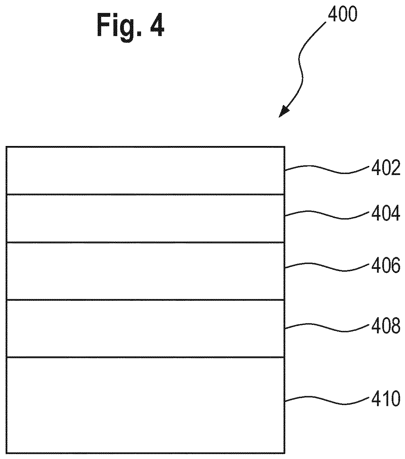

Figure 4 shows a schematic diagram of layers of the sandwich structure 400 according to another embodiment. The top layer 402 may be formed by a wooden veneer, thereby improving the visual appearance of the grille 304. Furthermore, the top layer may provide particular tactile properties for a user. The top layer 402 may be attached to a first (upper) silver-colored-vinyl layer 404. The silver-colored vinyl layer 404 may further improve the visual effects of the grille 304. The silver-colored vinyl layer 404 may reflect the light emitted by the LEDs (not shown) and thereby increase the light distribution within the grille 304. An acrylic layer 406 is attached to the silver-colored vinyl layer 404. The acrylic layer 406 serves as a light distributor/conductor from a light source (e.g. LEDs) to the cut-outs 314 in the sandwich structure 400. The light source may be disposed within the acrylic layer 406 or on an outer circular surface 112 of the grille 304. A second (lower) silver-colored vinyl layer 410 is attached to the acrylic layer 406 on a lower side of the acrylic layer 406. Acrylic layer 406 is sandwiched by the first and second silver-colored vinyl layers 404,408. Silver-colored vinyl layers 404,408 form a pair of reflectors on the upper and the lower sides of the light conducting acrylic layer 406. Silver-colored vinyl layers 404,408 thereby guide light emitted from the light source to the cut-outs 314 and enhance the light distribution within the acrylic layer 406. Metallic bottom layer 410 may be attached to the second silver-colored vinyl layer 408. Bottom layer 410 may be made of copper, but may also be made of any other suitable metal or material.

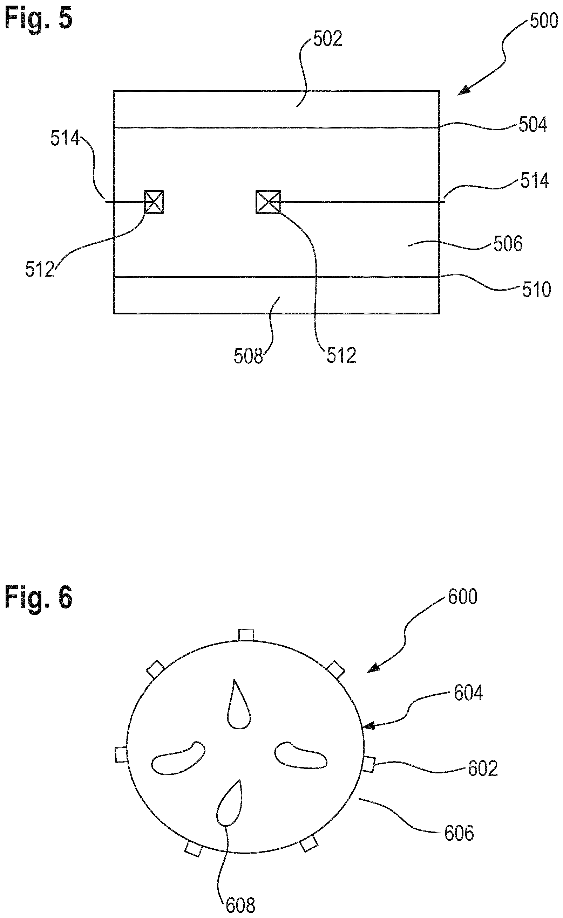

Figure 5 shows a schematic view of a section of a grille 500 according to a third embodiment. The grille 500 is formed by a sandwich structure comprising a top layer 502 and a first silver-colored vinyl layer 504 on a first (upper) side of acrylic layer 506 and a bottom layer 508 and a second silver-colored vinyl layer 510 on a second (lower) side of acrylic layer 506. Acrylic layer 506 comprises at least one LED 512. The number and the position of LEDs 512 within acrylic layer 506 may differ according to illumination needs; particularly the position of the LEDs may correspond with the position of the cut-outs in the sandwich structure, thereby ensuring adequate illumination of the cut-outs. LEDs 512 are provided with electrical connections 514 extending to the outer surface 112 of the sandwich structure. Electrical connections 514 provide the LEDs with electrical energy from a power source (not shown) and provide means to control operation of the LEDs (e.g. by a controller).

Figure 6 shows a schematic top view of a grille 600 according to a fourth embodiment. LEDs 602 are distributed around the disc-shaped sandwich structure forming the grille 600. LEDs 602 are arranged on an outer surface 604 of acrylic layer 606, thereby emitting light into light conducting acrylic layer 606. Emitted light passes through acrylic layer 606 and illuminates the inner surfaces of cut-outs 608. LEDs 602 may be distributed evenly on the radial outer surface 604 of acrylic layer 606, but may also be arranged to match illumination needs of more complex asymmetrical patterns such as flowers or the like formed by the cut-outs 608.

Whilst in this embodiment the sandwich structure is disc-shaped, other shapes are possible.

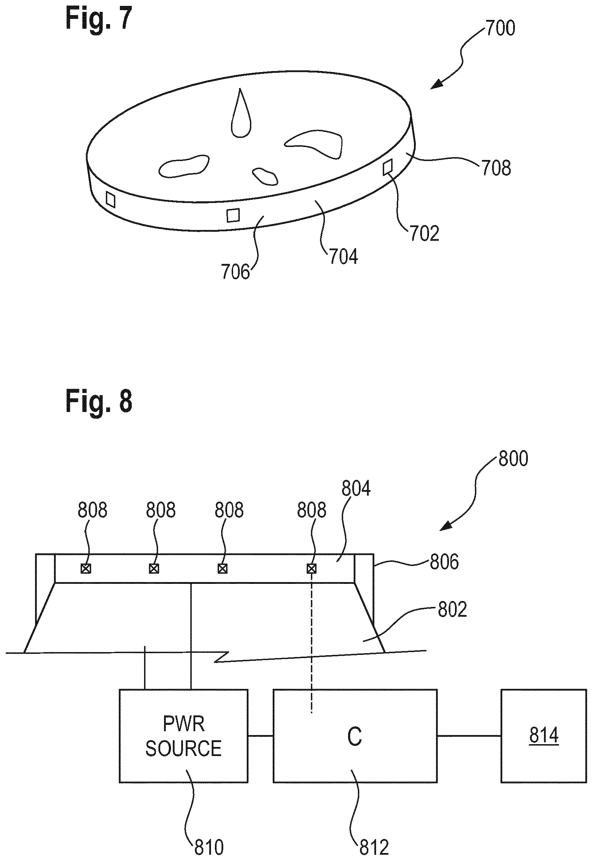

Figure 7 shows a schematic 3D view of a grille 700 according to the embodiment shown in Fig. 6. The LEDs 702 are arranged on an outer surface 704 of acrylic layer 706. The grille 700 is provided with a first silver-colored lining layer 708 provided to enhance the light distribution.

Figure 8 shows a schematic representation of a sound system 800 according to another embodiment. A speaker 802 is provided with a grille 804. The grille 804 is surrounded by a ring-shaped cover 806. The grille 804 is provided with LEDs 808 connected to a power source 810 and to a controller 812 by electrical connections (not shown). The power source 810 may provide power supply to each of the controller 812, the speaker 802 and the LEDs 808. The cover 806 may be ring-shaped, but may have any other shape. Particularly, the cover 806 is to prevent light emitted by the LEDs 808 from bypassing the outer surface of the grille 804. The cover 806 is arranged to match the form of the grille 804 and the form of the speaker 802. Controller 812 is operable to control the LEDs 808, particularly to control the emitted color, brightness and color saturation etc. Controller 812 may also be operable to allow for pulsating, circular and color effects on the grille 804. Controller 812 may comprise, or be connected to a computer readable medium 814, the medium 814 comprising instructions to be carried out by the controller 812 to control the illumination of the one or more LEDs 808 to be displayed in the cut-outs of grille 804.

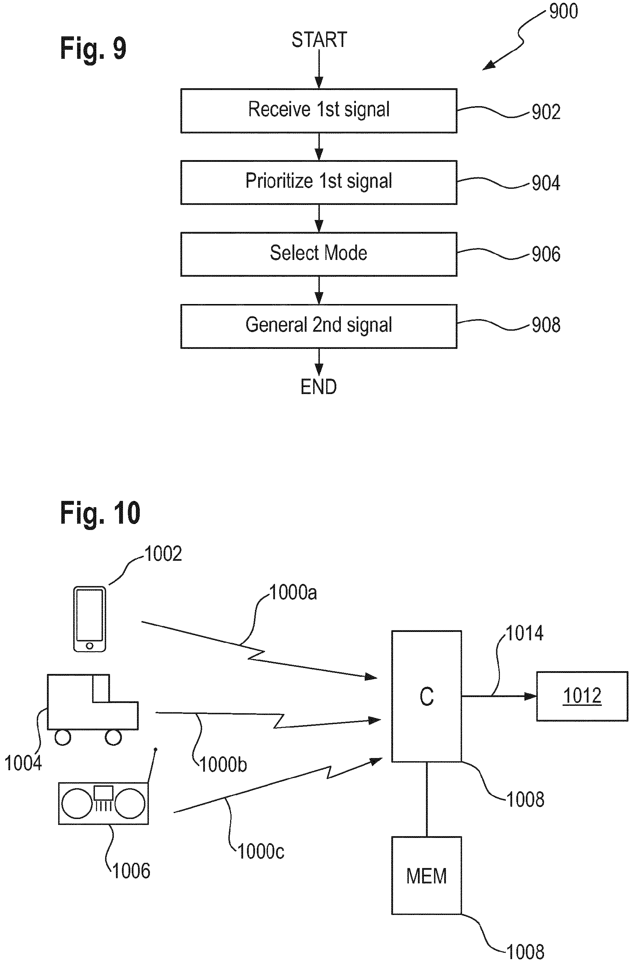

Figure 9 shows an exemplary flow diagram of a method 900 according to another embodiment. At step 902, a first signal is received by a controller. There may be a plurality of first signals from different sources. At step 904 the controller prioritizes one signal of the plurality of first signals. Prioritization may take aspects, such as vehicle safety, user compliance or the like into account. Also prioritization may be set by a user via a user interface (not shown). At step 906 the controller selects a mode of illumination in relation to the received first signal. The mode of illumination may be predetermined and stored in a memory (not shown). At step 908 the controller generates a second signal to control LEDs in the grille according to the selected illumination mode, thereby illuminating the grille. By this method, the grille may be illuminated according to a first signal.

Figure 10 shows a schematic diagram of the embodiment of Fig. 9, wherein the first signal 1000a-c may be provided by user equipment 1002, a vehicle 1004 or a sound system 1006. The first signal 1000a-c is received by controller 1008. Controller 1008 may be linked with a memory 1010. Memory 1010 may store information representing a predefined plurality of illumination modes. The illumination modes may be uniquely associated with the received plurality of first signals 1000. Controller 1008 may be operable to prioritize one first signal 1000a over another first signal 1000b and to select an associated illumination mode from memory 1010. Controller 1008 may then generate a second signal 1014, the second signal 1014 representing the selected illumination mode. The second signal 1014 is to control LEDs in the grille 1012 according to the selected illumination mode, thereby illuminating the grille 1012.

## Claims

1. A grille (100, 202, 304, 500, 600, 700) comprising:
a sandwich structure (400), the structure comprising at least an acrylic layer (102, 312, 406, 506, 606, 706);
one or more openings (108, 314) extending through the sandwich structure; and
one or more LEDs (512, 602) arranged in the at least an acrylic layer, wherein the at least an acrylic layer is configured to conduct light emitted from the LEDs to the openings, thereby to illuminate the openings.

2. The grille of claim 1, wherein the sandwich structure comprises:
a top layer (104, 204, 310, 402, 502) disposed on a first side of the at least an acrylic layer, thereby
forming a top surface of the grille; and/or
a bottom layer (206, 410, 508) disposed on a second side of the at least an acrylic layer, thereby forming a bottom surface of the grille.

3. The grille of any preceding claim, wherein the sandwich structure comprises:
a first silver-colored lining layer (404, 504, 710) disposed on the first side of the at least an acrylic layer
and arranged between the top layer and the at least an acrylic layer; and/or
a second silver-colored lining layer (408, 510) disposed on the second side of the at least an acrylic
layer and arranged between the at least an acrylic layer and the bottom layer.

4. The grille of any preceding claim, wherein the LEDs are provided with electrical connections extending to an outer surface of the sandwich structure.

5. The grille of any preceding claim, wherein the sandwich structure forms a circular disc and wherein the one or more LEDs are distributed at a radial outer surface of the circular disc to illuminate the at least an acrylic layer, thereby illuminating the cut-outs.

6. The grille of any preceding claim, wherein the first and/or the second silver-colored lining layers are silver-colored vinyl layers.

7. The grille of any preceding claim, wherein the top layer is a wooden veneer and the bottom layer is a metal layer, preferably a copper, brass, aluminum or steel layer.

8. A sound system (800) comprising:
at least one speaker (802);
at least one grille (804) according to claims 1-7;
a controller (812) operable to control the LEDs; and
a power source (810).

9. The sound system of claim 8, comprising a computer readable medium, the medium comprising instructions to be carried out by the controller to control the illumination to be displayed in the cut-outs.

10. A method (900) for illuminating a grille according to any of claims 1-7, the method comprising:
receiving (902), by a controller, one or more first signals;
selecting (906), by the controller, one of a plurality of illumination modes, wherein the illumination mode is associated with one of the received first signals;
generating (908), by the controller, a second signal to control LEDs in the grille according to the selected illumination mode, thereby illuminating the grille.

11. The method of claim 10, wherein the controller is operable to receive a plurality of first signals; to prioritize one first signal of the plurality of first signals; and to operate in a mode according to the prioritized first signal.

12. The method of claim 10, wherein one of the first signals is generated by a user equipment.

13. The method of claim 10, wherein one of the first signals is generated by a vehicle, the signal representing an operation mode of the vehicle.

14. The method of claim 10, wherein one of the first signals is generated by a sound system.

## Patentansprüche

1. Grill (100, 202, 304, 500, 600, 700), der Folgendes umfasst:
eine Sandwichstruktur (400), wobei die Struktur mindestens eine Acrylschicht (102, 312, 406, 506, 606, 706) umfasst;
eine oder mehrere Öffnungen (108, 314), die sich durch die Sandwichstruktur erstrecken; und
eine oder mehrere LEDs (512, 602), die in der mindestens einen Acrylschicht angeordnet sind, wobei die mindestens eine Acrylschicht dazu konfiguriert ist, von den LEDs emittiertes Licht zu den Öffnungen zu leiten, um somit die Öffnungen zu beleuchten.

2. Grill nach Anspruch 1, wobei die Sandwichstruktur Folgendes umfasst:
eine obere Schicht (104, 204, 310, 402, 502), die auf einer ersten Seite der mindestens einen Acrylschicht angeordnet ist, wodurch eine Oberseite des Grills gebildet wird; und/oder
eine untere Schicht (206, 410, 508), die auf einer zweiten Seite der mindestens einen Acrylschicht angeordnet ist, wodurch eine Unterseite des Grills gebildet wird.

3. Grill nach einem der vorstehenden Ansprüche, wobei die Sandwichstruktur Folgendes umfasst:
eine erste silberfarbige Verkleidungsschicht (404, 504, 710), die auf der ersten Seite der mindestens einen Acrylschicht und zwischen der oberen Schicht und der mindestens einen Acrylschicht angeordnet ist; und/oder
eine zweite silberfarbige Verkleidungsschicht (408, 510), die auf der zweiten Seite der mindestens einen Acrylschicht und zwischen der mindestens einen Acrylschicht und der unteren Schicht angeordnet ist.

4. Grill nach einem der vorstehenden Ansprüche, wobei die LEDs mit elektrischen Verbindungen versehen sind, die sich zu einer Außenfläche der Sandwichstruktur erstrecken.

5. Grill nach einem der vorstehenden Ansprüche, wobei die Sandwichstruktur eine kreisförmige Scheibe bildet und wobei die eine oder mehreren LEDs an einer radialen Außenfläche der kreisförmigen Scheibe verteilt sind, um die mindestens eine Acrylschicht zu beleuchten, wodurch die Ausschnitte beleuchtet werden.

6. Grill nach einem der vorstehenden Ansprüche, wobei die erste und/oder die zweite silberfarbige Verkleidungsschicht silberfarbige Vinylschichten sind.

7. Grill nach einem der vorstehenden Ansprüche, wobei die obere Schicht ein Holzfurnier ist und die untere Fläche eine Metallschicht, vorzugsweise eine Kupfer-, Messing-, Aluminium-oder Stahlschicht, ist.

8. Soundsystem (800), das Folgendes umfasst:
mindestens einen Lautsprecher (802);
mindestens einen Grill (804) nach einem der Ansprüche 1-7;
eine Steuerung (812), die betreibbar ist, um die LEDs zu steuern; und
eine Leistungsquelle (810).

9. Soundsystem nach Anspruch 8, umfassend ein computerlesbares Medium, wobei das Medium Anweisungen umfasst, die durch die Steuerung auszuführen sind, um die Beleuchtung so zu steuern, dass sie in den Ausschnitten angezeigt wird.

10. Verfahren (900) zum Beleuchten eines Grills nach einem der Ansprüche 1-7, wobei das Verfahren Folgendes umfasst:
Empfangen (902) eines oder mehrerer erster Signale durch eine Steuerung;
Auswählen (906) eines von einer Vielzahl von Beleuchtungsmodi durch die Steuerung, wobei der Beleuchtungsmodus mit einem der empfangenen ersten Signale zusammenhängt;
Generieren (908) eines zweiten Signals durch die Steuerung, um die LEDs in dem Grill gemäß dem ausgewählten Beleuchtungsmodus zu steuern, wodurch der Grill beleuchtet wird.

11. Verfahren nach Anspruch 10, wobei die Steuerung betreibbar ist, um eine Vielzahl von ersten Signalen zu empfangen; ein erstes Signal der Vielzahl von ersten Signalen zu priorisieren; und gemäß dem priorisierten ersten Signal in einem Modus zu arbeiten.

12. Verfahren nach Anspruch 10, wobei eines der ersten Signale durch ein Benutzergerät generiert wird.

13. Verfahren nach Anspruch 10, wobei eines der ersten Signale durch ein Fahrzeug generiert wird, wobei das Signal einen Betriebsmodus des Fahrzeugs darstellt.

14. Verfahren nach Anspruch 10, wobei eines der ersten Signale durch ein Soundsystem generiert wird.

## Revendications

1. Grille (100, 202, 304, 500, 600, 700) comprenant :
une structure en sandwich (400), la structure comprenant au moins une couche d'acrylique (102, 312, 406, 506, 606, 706) ;
une ou plusieurs ouvertures (108, 314) s'étendant à travers la structure en sandwich ; et
une ou plusieurs LED (512, 602) agencées dans l'au moins une couche d'acrylique, dans laquelle l'au moins une couche d'acrylique est configurée pour conduire une lumière émise à partir des LED vers les ouvertures, pour éclairer les ouvertures.

2. Grille selon la revendication 1, dans laquelle la structure en sandwich comprend :
une couche supérieure (104, 204, 310, 402, 502) disposée sur un premier côté de l'au moins une couche d'acrylique, en formant ainsi une surface supérieure de la grille ; et/ou une couche inférieure (206, 410, 508) disposée sur un second côté de l'au moins une couche d'acrylique, en formant ainsi une surface inférieure de la grille.

3. Grille selon une quelconque revendication précédente, dans laquelle la structure en sandwich comprend :
une première couche de doublure couleur argent (404, 504, 710) disposée sur le premier côté de l'au moins une couche d'acrylique et agencée entre la couche supérieure et l'au moins une couche d'acrylique ; et/ou
une seconde couche de doublure couleur argent (408, 510) disposée sur le second côté de l'au moins une couche d'acrylique et agencée entre l'au moins une couche d'acrylique et la couche inférieure.

4. Grille selon une quelconque revendication précédente, dans laquelle les LED sont munies de connexions électriques s'étendant vers une surface extérieure de la structure en sandwich.

5. Grille selon une quelconque revendication précédente, dans laquelle la structure en sandwich forme un disque circulaire et dans laquelle les une ou plusieurs LED sont distribuées au niveau d'une surface extérieure radiale du disque circulaire pour éclairer l'au moins une couche d'acrylique, en éclairant ainsi les découpes.

6. Grille selon une quelconque revendication précédente, dans laquelle les première et/ou seconde couches de doublure couleur argent sont des couches de vinyle couleur argent.

7. Grille selon une quelconque revendication précédente, dans laquelle la couche supérieure est un placage en bois et la couche inférieure est une couche métallique, de préférence une couche de cuivre, de laiton, d'aluminium ou d'acier.

8. Système audio (800) comprenant :
au moins un haut-parleur (802) ;
au moins une grille (804) selon les revendications 1-7 ;
un dispositif de commande (812) utilisable pour commander les LED ; et
une source d'énergie (810).

9. Système audio selon la revendication 8, comprenant un support lisible par ordinateur, le support comprenant des instructions destinées à être exécutées par le dispositif de commande pour commander l'éclairage pour être visualisé dans les découpes.

10. Procédé (900) d'éclairage d'une grille selon l'une quelconque des revendications 1-7, le procédé comprenant :
la réception (902), par un dispositif de commande, d'un ou plusieurs premiers signaux ;
la sélection (906), par le dispositif de commande, d'un d'une pluralité de modes d'éclairage, dans lequel le mode d'éclairage est associé à un des premiers signaux reçus ;
la génération (908), par le dispositif de commande, d'un second signal pour commander des LED dans la grille en fonction du mode d'éclairage sélectionné, en éclairant ainsi la grille.

11. Procédé selon la revendication 10, dans lequel le dispositif de commande est utilisable pour recevoir une pluralité de premiers signaux ; pour prioriser un premier signal de la pluralité de premiers signaux ; et pour fonctionner dans un mode en fonction du premier signal priorisé.

12. Procédé selon la revendication 10, dans lequel un des premiers signaux est généré par un équipement utilisateur.

13. Procédé selon la revendication 10, dans lequel un des premiers signaux est généré par un véhicule, le signal représentant un mode de fonctionnement du véhicule.

14. Procédé selon la revendication 10, dans lequel un des premiers signaux est généré par un système audio.
